# EUROPÄISCHE PATENTANMELDUNG

(11) **EP 3 721 713 A1**
(43) Veröffentlichungstag der Anmeldung: **14.10.2020**
(21) Anmeldenummer: 20160719.9
(22) Anmeldetag: 03.03.2020
(51) Int. Cl.: A21C 3/04, A21C 7/00, B65H 7/20

(54) **VORRICHTUNG ZUR FORMUNG EINES TEIGBANDS**

(30) Priorität: 08.04.2019 DE 102019109121
(71) Anmelder: Fritsch Bakery Technologies GmbH & Co. KG, 97348 Markt Einersheim (DE)
(72) Erfinder: BARTH, Fritz, 74336 Meimsheim (DE)
(74) Vertreter: Grünecker Patent- und Rechtsanwälte PartG mbB

(57) **Zusammenfassung**

Die Erfindung betrifft eine Vorrichtung (01) zur Formung eines Teigbands mit zumindest einem Walzenstuhl (03), wobei in dem Walzenstuhl (03) zumindest eine Teigwalze (04, 05) vorgesehen ist, mit der das Teigband in einem Walzenspalt gewalzt werden kann, und wobei an der Vorrichtung (01) ein Eingriffsschutz vorgesehen ist, mit dem der Eingriff in einen die rotierende Teigwalze (04/05) umgebenden Sicherheitsbereich ausgeschlossen wird, wobei der Eingriffsschutz eine berührungslos arbeitende Eingriffssensorik (06, 07) umfasst, mit der ein Eingriff in den die Grenze des Sicherheitsbereichs definierenden Detektionsbereich der Eingriffssensorik (06, 07) berührungslos detektiert werden kann, und wobei der Eingriffsschutz eine elektronische Steuerungseinrichtung umfasst, die die Sensordaten der Eingriffssensorik (06, 07) auswertet, und wobei die Steuerungseinrichtung bei Detektion eines Eingriffs in den Detektionsbereich automatisch den Antrieb der Teigwalze (04, 05) stoppt.

## Beschreibung

Die Erfindung betrifft eine Vorrichtung zur Formung eines Teigbands mit zumindest einem Walzenstuhl nach dem Oberbegriff des Anspruchs 1.

Eine gattungsgemäße Vorrichtung zur Formung eines Teigbands mit zumindest einem Walzenstuhl ist beispielsweise aus der EP 1 005 793 A1 bekannt. Im Walzenstuhl der gattungsgemäßen Vorrichtung wird das Teigband in einem Walzenspalt umgeformt, um beispielsweise das Teigband dünner auszurollen. Das Teigband gelangt im Walzenspalt an einer rotierenden Teigwalze zum Eingriff, um die entsprechenden Walzumformungen zu realisieren.

Von dem Walzenspalt geht potentiell eine erhebliche Verletzungsgefahr aus. Gelangt ungewollt ein Körperteil, beispielsweise eine Hand, in den Walzenspalt, können dadurch erhebliche Verletzungen verursacht werden. Im Hinblick auf diese potentiellen Gefahren gibt es für die Herstellung und den Betrieb solcher Vorrichtungen eine Vielzahl von Sicherheitsvorschriften. Gemäß einer Sicherheitsvorschrift ist es vorgesehen, dass um die rotierenden Teigwalzen der Vorrichtung ein Sicherheitsbereich gebildet wird. Um diesen Sicherheitsbereich vor unzulässigen Eingriffen, beispielsweise durch das Bedienpersonal, zu schützen, ist an bekannten Vorrichtungen ein Eingriffsschutz vorgesehen. Als Eingriffsschutz sind insbesondere Abdeckhauben bekannt, die den Sicherheitsbereich um die rotierende Teigwalze umschließen, so dass ein Eingriff in den Sicherheitsbereich nicht mehr möglich ist.

Nachteilig an den bekannten Hauben zur Abdeckung des Sicherheitsbereichs um die rotierenden Teigwalzen ist es, dass durch die Abdeckhauben zusätzliche Hygieneprobleme auftreten können. So müssen die Abdeckhauben regelmäßig gründlich gereinigt werden, um an der Innenseite auftretende Anhaftungen zu entfernen. Weiter nachteilig an den Abdeckhauben ist es, dass der Umformprozess im Walzenspalt aufgrund der Abdeckung mit der Abdeckhaube von außen nur eingeschränkt bzw. gar nicht beobachtet werden kann. Eine kontinuierliche Sichtkontrolle wird somit durch die bekannten Abdeckhauben erschwert.

Ausgehend von diesem Stand der Technik ist es deshalb Aufgabe der vorliegenden Erfindung, eine neue Vorrichtung zur Formung eines Teigbands vorzuschlagen, die die Nachteile der bekannten Vorrichtungen vermeidet.

Diese Aufgabe wird durch eine Vorrichtung gemäß der erfindungsgemäßen Lehre gelöst.

Vorteilhafte Ausführungsformen der Erfindung sind Gegenstand der Unteransprüche.

Die erfindungsgemäße Vorrichtung beruht auf dem Grundgedanken, dass als Eingriffsschutz eine berührungslos arbeitende Eingriffssensorik vorgesehen ist. Diese Eingriffssensorik weist einen Detektionsbereich auf, wobei ein Eingriff in den Detektionsbereich durch die Eingriffssensorik berührungslos festgestellt werden kann. Die Eingriffssensorik wird dann so an der Vorrichtung zur Formung des Teigbands angebracht, dass der Detektionsbereich der Eingriffssensorik entlang der Grenze des Sicherheitsbereichs um die rotierende Teigwalze verläuft. Weiterer Bestandteil des Eingriffsschutzes ist eine elektronische Steuerungseinrichtung, mit der die Sensordaten der Eingriffssensorik ausgewertet werden. Sobald die Steuerungseinrichtung einen Eingriff in den Detektionsbereich der Eingriffssensorik feststellt, so dass von einem Eingriff in den Sicherheitsbereich um die rotierende Teigwalze ausgegangen werden muss, wird der Antrieb der Teigwalze automatisch gestoppt, und die Gefährdung des Bedienpersonals durch die rotierende Teigwalze dadurch beendet. Aufgrund der berührungslos arbeitenden Detektion der Eingriffssensorik können Hygieneprobleme durch Anhaftungen ohne Weiteres ausgeräumt werden, so dass eine aufwendige Reinigung des Eingriffsschutzes entfällt.

Aufgrund der Massenträgheit der Teigwalze bzw. des Antriebs zum Antrieb der Teigwalze kann es beim Stopp des Antriebs der Teigwalze zu einer unerwünschten Verzögerung kommen, bis die Teigwalze zum endgültigen Stillstand kommt. Um die entsprechenden Gefährdungen durch die Teigwalze weiter zu verringern, ist es besonders vorteilhaft, wenn der Eingriffsschutz zusätzlich eine Bremseinrichtung umfasst, mit der die Teigwalze abgebremst werden kann. Sobald die Steuerungseinrichtung mit der berührungslos arbeitenden Eingriffssensorik einen Eingriff in den Detektionsbereich feststellt, kann nicht nur der Antrieb der Teigwalze abgeschaltet, sondern zugleich die Rotationsbewegung der Teigwalze mit der Bremseinrichtung sehr schnell abgebremst werden.

Welche Art von Eingriffssensorik zur berührungslosen Detektion von Eingriffen in den Detektionsbereich verwendet wird, ist grundsätzlich beliebig. Gemäß einer bevorzugten Ausführungsvariante ist vorgesehen, dass die Eingriffssensorik zumindest eine Lichtschranke umfasst. Bei diesen Lichtschranken sind üblicherweise eine Sende- und eine Empfangseinheit vorgesehen. Die Sendeeinheit sendet dabei einen Lichtstrahl aus, der an der Empfangseinheit empfangen wird. Wird durch einen Eingriff in den Detektionsbereich der Lichtstrahl unterbrochen, kann dies durch die Empfangseinheit festgestellt werden. Sobald an der Empfangseinheit kein Lichtstrahl mehr detektiert werden kann, muss von einem Eingriff in den Detektionsbereich ausgegangen werden, der durch die Steuerungseinrichtung entsprechend ausgewertet werden kann.

Um den Sicherheitsbereich um die rotierende Teigwalze umfassend im Hinblick auf Eingriffe in den Sicherheitsbereich überwachen zu können, reicht in der Regel eine Lichtschranke nicht aus. Es ist deshalb besonders vorteilhaft, wenn die Lichteingriffssensorik mehrere Lichtschranken umfasst, die ein flächiges Lichtgitter bilden. Die Abstände zwischen den einzelnen Lichtschranken sind dabei so zu wählen, dass ein lichtdetektierbarer Eingriff in den Sicherheitsbereich ausgeschlossen ist. Insofern ist beispielsweise ein seitlicher Abstand zwischen den Lichtstrahlen der einzelnen Lichtschranken erforderlich, der kleiner als die Abmessungen eines entsprechenden Körperteils, beispielsweise einer Hand, ist.

Durch die erfindungsgemäße Eingriffssensorik wird bei Feststellung eines Eingriffs in den Detektionsbereich ein Not-Aus-Signal generiert, das die gesamte Vorrichtung schlagartig zum Halten bringt. Ist die Vorrichtung Bestandteil einer Fertigungslinie, bestehend beispielsweise aus mehreren solcher Walzvorrichtungen mit den dazwischenliegenden Transportbändern, wird durch das Not-Aus-Signal die gesamte Linie abgeschaltet. Im Hinblick auf die Effektivität des Produktionsvorgangs ist es deshalb unbedingt erforderlich, dass ungewollte bzw. unbewusste Eingriffe in den Detektionsbereich der Eingriffssensorik vermieden werden, da nach Auslösung eines Not-Aus-Signals das Wiederanfahren einer entsprechenden Anlage einen sehr hohen Aufwand darstellt. Es ist deshalb besonders vorteilhaft, wenn neben dem ersten Eingriffsschutz, mit der berührungslos arbeitenden Eingriffssensorik, an der Vorrichtung zusätzlich ein zweiter Eingriffsschutz vorgesehen ist. Dieser zweite Eingriffsschutz wird auf der von der Teigwalze wegweisenden Seite des Detektionsbereichs angeordnet, so dass der zweite Eingriffsschutz dem ersten Eingriffsschutz vorgeordnet ist. Der zweite Eingriffsschutz hat dabei die Aufgabe, die Annäherung eines Körperteils an den Detektionsbereich der Eingriffssensorik des ersten Eingriffsschutzes entweder auszuschließen, zu erschweren oder zu signalisieren. Nähert beispielsweise das Bedienpersonal in unbewusster oder unvorsichtigerweise einen Körperteil an den Detektionsbereich der berührungslos arbeitenden Eingriffssensorik an, so wird ein Eingriff in den Detektionsbereich durch den zweiten Eingriffsschutz entweder ganz ausgeschlossen, zumindest erschwert oder signalisiert. Durch den zweiten Eingriffsschutz wird also der Eingriff in den Detektionsbereich entweder ausgeschlossen bzw. erschwert oder dem Bedienpersonal zumindest signalisiert. Die Anzahl von unbewussten bzw. unbeabsichtigten Eingriffen in den Detektionsbereich der berührungslosen Eingriffssensorik kann auf diese Weise maßgeblich reduziert, und die Effektivität der Vorrichtung entsprechend erhöht werden.

Die gattungsgemäßen Vorrichtungen weisen einen Teigbandeinlauf und einen Teigbandauslauf auf. Am Teigbandeinlauf wird das Teigband in den Walzenspalt zugeführt, wohingegen das Teigband am Teigbandauslauf aus dem Walzenspalt abgeführt wird. Dies bedeutet mit anderen Worten, dass das Teigband am Teigbandauslauf den Walzenspalt in umgeformter, d. h. in gewalzter Form, verlässt. Für die Prozesskontrolle der Formung des Teigbands ist es beim Betrieb der gattungsgemäßen Vorrichtung vielfach erforderlich, dass das Walzergebnis, d. h. der Zustand des Teigbands nach Verlassen des Walzenspalts durch das Bedienpersonal kontrolliert wird. Aufgrund dieses Kontrollerfordernisses ist es deshalb vielfach erforderlich, dass sich das Bedienpersonal von der Seite des Teigbandauslaufs an den Sicherheitsbereich um den Walzenspalt annähert, um dort beispielsweise Teigproben zu entnehmen. Um eine unbeabsichtigte Auslösung der Eingriffssensorik mit dem dadurch verbundenen Not-Aus der Anlage zuverlässig zu vermeiden, ist es deshalb besonders vorteilhaft, wenn am Teigbandauslauf vor dem Detektionsbereich der dort angebrachten Eingriffssensorik ein zweiter Eingriffsschutz vorgesehen ist, der eine Annäherung eines Körperteils an den Detektionsbereich der Eingriffssensorik ausschließt, erschwert oder signalisiert.

In welcher Weise der zweite Eingriffsschutz konstruktiv ausgebildet ist, ist grundsätzlich beliebig. Gemäß einer ersten Ausführungsvariante ist es vorgesehen, dass der Eingriffsschutz ein Barriereelement umfasst, mit dem der Detektionsbereich der Eingriffssensorik zumindest teilweise abgedeckt wird. Dies bedeutet mit anderen Worten, dass das Barriereelement eine mechanische Barriere vor dem Detektionsbereich der berührungslosen Eingriffssensorik aufbaut, so dass für den Eingriff in den Detektionsbereich das Barriereelement entfernt oder umgriffen werden muss. Insofern kann mit dem Barriereelement ein unerwünschter bzw. unbeabsichtigter Eingriff in den Detektionsbereich der Eingriffssensorik ausgeschlossen bzw. erschwert werden.

Um eine Prozesskontrolle des Umformprozesses im Walzenspalt trotz des Barriereelements problemlos durchführen zu können, ist es besonders vorteilhaft, wenn das Barriereelement zumindest ein Sichtfenster aufweist. In diesem Sichtfenster kann dann der Umformprozess durch das Barriereelement hindurch beobachtet werden.

Wenn das Sichtfenster ausreichend klein ist, wird der Eingriffsschutz durch das Sichtfenster dadurch gewährleistet, dass das entsprechende Körperteil, beispielsweise eine Hand, nicht durch das Sichtfenster hindurchgesteckt werden kann. Diese Größenbeschränkung des Sichtfensters schränkt allerdings den Sichtbereich bei der Beobachtung der Umformzone ein. Insofern ist es besonders vorteilhaft, wenn das Barriereelement zumindest teilweise, insbesondere im Bereich des Sichtfensters, aus einem durchsichtigen Material hergestellt ist. Insbesondere kann das Barriereelement selbst insgesamt aus einem durchsichtigen Material hergestellt sein. Auf diese Weise wird die Sicht auf die Umformzone in keiner Weise eingeschränkt, und zugleich ein unbeabsichtigter Eingriff in den Detektionsbereich ausgeschlossen.

Im Hinblick auf die Prozesskontrolle des Umformprozesses im Walzenspalt ist es besonders vorteilhaft, wenn das Barriereelement zwischen einer Schutzstellung und einer Nichtschutzstellung verstellt werden kann. In der Schutzstellung wird ein Eingriff in den Detektionsbereich der Eingriffssensorik durch das Barriereelement grundsätzlich ausgeschlossen. Erst durch Öffnen des Barriereelements und der damit verbundenen Verstellung in die Nichtschutzstellung wird ein Eingriff in den Detektionsbereich ermöglicht. Da dazu allerdings die bewusste Verstellung des Barriereelements erforderlich ist, ist ein unbeabsichtigter Eingriff in den dahinterliegenden Detektionsbereich der berührungslosen Eingriffssensorik entsprechend unwahrscheinlich.

Alternativ zu einem Barriereelement kann als zweiter Eingriffsschutz auch eine berührungslos arbeitende Eingriffssensorik, beispielsweise eine zweite Lichtschranke oder ein zweites Lichtgitter eingesetzt werden. Diese zweite berührungslos arbeitende Eingriffssensorik arbeitet dann mit einer Steuerungseinrichtung zusammen, die bei Annäherung an den Detektionsbereich der Eingriffssensorik des ersten Eingriffsschutzes ein optisches und/oder akustisches und/oder haptisch wahrnehmbares Warnsignal abgibt. Im Ergebnis wird also das Bedienpersonal bei Annäherung an den Detektionsbereich der Eingriffssensorik des ersten Eingriffsschutzes durch die entsprechende optische bzw. akustische bzw. haptische Signalgebung vor dem Eingriff in den Detektionsbereich gewarnt.

Eine Ausführungsform der Erfindung ist in den Zeichnungen schematisiert dargestellt und wird nachfolgend beispielhaft erläutert.

Es zeigen:
Fig. 1 eine erfindungsgemäße Vorrichtung mit berührungslos arbeitender Eingriffssensorik in perspektivischer seitlicher Ansicht;
Fig. 2 die Vorrichtung gemäß Fig. 1 in Ansicht von vorne;
Fig. 3 die Vorrichtung gemäß Fig. 1 in Ansicht von oben;
Fig. 4 die Vorrichtung gemäß Fig. 3 mit einem in die Schutzstellung verstellten zweiten Eingriffsschutz in Ansicht von oben;
Fig. 5 die Vorrichtung gemäß Fig. 3 in seitlicher Ansicht;
Fig. 6 die Vorrichtung gemäß Fig. 4 in seitlicher Ansicht.

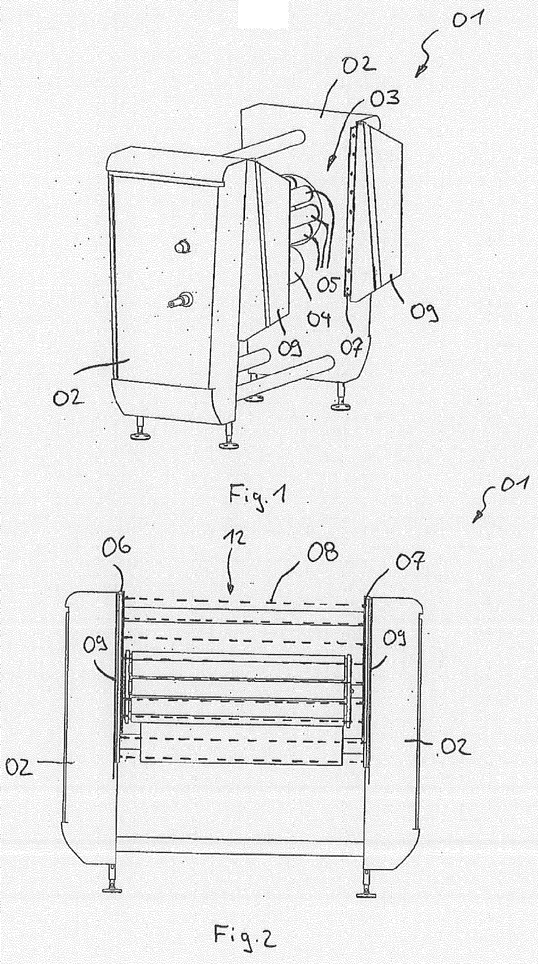

Fig. 1 zeigt eine Vorrichtung 01 zur Formung eines Teigbands in perspektivischer Ansicht. Im Zentrum der Vorrichtung 01 ist an einem Gestell 02 ein Walzenstuhl 03 mit mehreren Teigwalzen 04 und 05 vorgesehen. In einem zwischen den Teigwalzen 04 und 05 gebildeten Walzenspalt kann ein Teigband walzend umgeformt werden. Um einen Eingriff in den Sicherheitsbereich vor den rotierenden Teigwalzen 04 und 05 auszuschließen, ist an der Vorrichtung 01 ein Eingriffsschutz mit einer berührungslosen Eingriffssensorik vorgesehen. Bei der dargestellten Ausführungsvariante wird die berührungslose Eingriffssensorik von einem Lichtgitter 12 mit mehreren Lichtschranken gebildet. Die Sendeeinheiten der Lichtschranken sind dabei in einem Sendemodul 06 und einem Empfangsmodul 07 untergebracht.

Wie in Fig. 2 dargestellt geben mehrere Lichtquellen im Sendemodul 06 Lichtstrahlen 08 ab, die parallel zueinander verlaufen und an Empfangseinheiten im Empfangsmodul 07 aufgenommen werden. Greift nun ein Bediener mit einem Körperteil in den Gefahrenbereich um den Walzenstuhl 03 von außen ein, so wird zumindest ein Lichtstrahl 08 dadurch unterbrochen, wobei diese Unterbrechung des Lichtstrahls 08 von der in Fig. 2 nicht dargestellten elektronischen Steuerungseinrichtung der Eingriffssensorik detektiert wird. Durch diese Detektion eines Eingriffs in den Gefahrenbereich, d. h. bei Unterbrechung eines Lichtstrahls 08, wird der Antrieb des Walzenstuhls 03 durch ein Not-Aus-Signal gestoppt. Zugleich können auch alle vor- und nachgelagerten Funktionseinheiten, beispielsweise Transportbänder, durch das Not-Aus-Signal abgeschaltet werden.

Zum Schutz vor unbeabsichtigten Eingriffen in den Detektionsbereich der von dem Sendemodul 06 und dem Empfangsmodul 07 gebildeten Lichtgitter 12 dient ein zweiter Eingriffsschutz, der von zwei schwenkbar gelagerten Barriereelementen 09 gebildet wird. Bei der Darstellung in Fig. 1 befinden sich die Barriereelemente 09 in ihrer Nichtschutzstellung, so dass das dahinterliegende Lichtgitter von den Barriereelementen 09 nicht abgedeckt ist. In diesem Zustand kann das Bedienpersonal, beispielweise bei stehender Vorrichtung 01, in den Gefahrenbereich des Walzenstuhls 03 eingreifen.

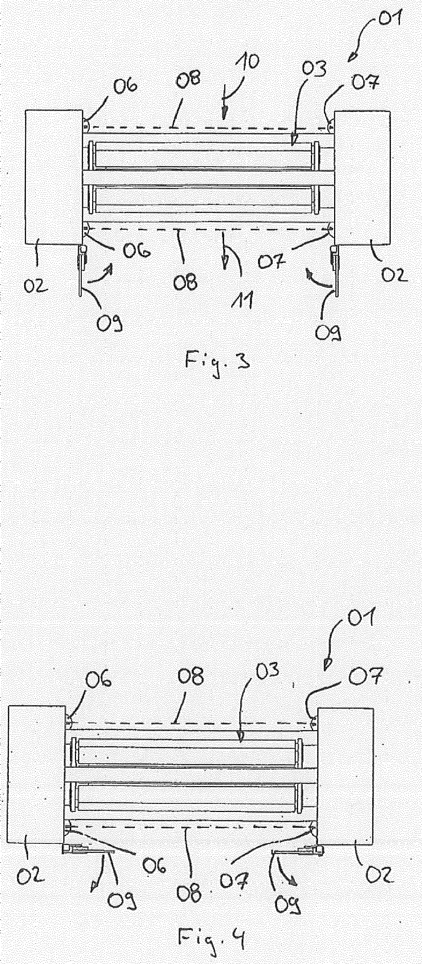

Fig. 3 zeigt die Vorrichtung 01 in Ansicht von oben. Sowohl am Teigbandeinlauf 10 als auch am Teigbandauslauf 11 sind Lichtgitter 12 zum Schutz des Sicherheitsbereichs um den rotierenden Walzenstuhl 03 vorgesehen. Auf der Seite des Teigbandauslaufs 11 ist zusätzlich der zweite Eingriffsschutz mit den beiden Barriereelementen 09 vorgesehen, wobei die beiden Barriereelemente 09 sich in der Darstellung gemäß Fig. 3 in ihrer Nichtschutzstellung befinden.

Fig. 4 zeigt die Vorrichtung 01 nach Anordnung der beiden Barriereelemente 09 in ihrer Schutzstellung, wozu die Barriereelemente um 90° nach innen verschwenken. Durch die mechanische Barriere der Barriereelemente 09 wird jetzt ein unbeabsichtigter Eingriff in den Detektionsbereich des Lichtgitters 12 am Teigwandauslauf 11 der Vorrichtung 01 ausgeschlossen.

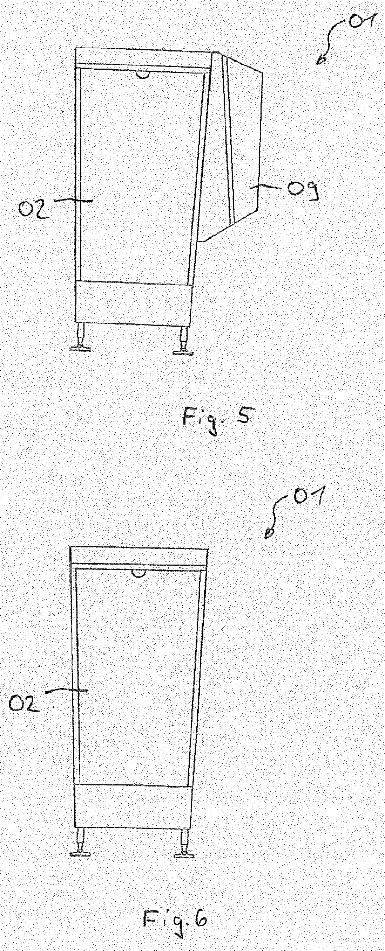

Fig. 5 zeigt die Vorrichtung 01 mit aufgeklappten Barriereelementen 09. In dieser Nichtschutzstellung der Barriereelemente 09 besteht kein zweiter Eingriffsschutz, so dass bei Eingriff in den Detektionsbereich des Lichtgitters 12 automatisch ein Not-Aus-Signal generiert wird.

Fig. 6 zeigt die Vorrichtung 01 bei Verstellung der Barriereelemente 09 in ihrer Schutzstellung.

## Patentansprüche

1. Vorrichtung (01) zur Formung eines Teigbands mit zumindest einem Walzenstuhl (03), wobei in dem Walzenstuhl (03) zumindest eine Teigwalze (04, 05) vorgesehen ist, mit der das Teigband in einem Walzenspalt gewalzt werden kann, und wobei an der Vorrichtung (01) ein Eingriffsschutz vorgesehen ist, mit dem der Eingriff in einen die rotierende Teigwalze (04, 05) umgebenden Sicherheitsbereich ausgeschlossen wird, **dadurch gekennzeichnet, dass** der Eingriffsschutz eine berührungslos arbeitende Eingriffssensorik (06, 07) umfasst, mit der ein Eingriff in den die Grenze des Sicherheitsbereichs definierenden Detektionsbereich der Eingriffssensorik (06, 07) berührungslos detektiert werden kann, und wobei der Eingriffsschutz eine elektronische Steuerungseinrichtung umfasst, die die Sensordaten der Eingriffssensorik (06, 07) auswertet, und wobei die Steuerungseinrichtung bei Detektion eines Eingriffs in den Detektionsbereich automatisch den Antrieb der Teigwalze (04, 05) stoppt.

2. Vorrichtung nach Anspruch 1, **dadurch gekennzeichnet, dass** die Steuerungseinrichtung bei Detektion eines Eingriffs in den Detektionsbereich die rotierende Teigwalze (04, 05) automatisch mit einer Bremseinrichtung abbremst.

3. Vorrichtung nach Anspruch 1 oder 2, **dadurch gekennzeichnet, dass** die Eingriffssensorik (06, 07) zumindest eine Lichtschranke umfasst.

4. Vorrichtung nach Anspruch 3, **dadurch gekennzeichnet, dass** die Eingriffssensorik (06, 07) mehrere Lichtschranken umfasst, die ein flächiges Lichtgitter (12) bilden.

5. Vorrichtung nach einem der Ansprüche 1 bis 4, **dadurch gekennzeichnet, dass** auf der von der Teigwalze (04, 05) wegweisenden Seite des Detektionsbereichs ein zweiter Eingriffsschutz (09) vorgesehen ist, mit dem die Annäherung eines Körperteils an den Detektionsbereich der Eingriffssensorik ausgeschlossen oder erschwert oder signalisiert werden kann.

6. Vorrichtung nach Anspruch 5,**dadurch gekennzeichnet, dass** die Vorrichtung einen Teigbandeinlauf (10), an dem das Teigband in den Walzenspalt zugeführt wird, und einen Teigbandauslauf (11), an dem das Teigband aus dem Walzenspalt abgeführt wird, aufweist, wobei am Teigbandeinlauf (10) und am Teigbandauslauf (11) jeweils ein Eingriffsschutz mit einer berührungslos arbeitenden Eingriffssensorik (06, 07) vorgesehen ist, und wobei am Teigbandauslauf (11) vor dem Detektionsbereich der Eingriffssensorik (06, 07) ein zweiter Eingriffsschutz (09) vorgesehen ist.

7. Vorrichtung nach Anspruch 5 oder 6, **dadurch gekennzeichnet, dass** der zweite Eingriffsschutz zumindest ein Barriereelement (09) umfasst, mit dem der Detektionsbereich zumindest teilweise abgedeckt wird.

8. Vorrichtung nach Anspruch 7, **dadurch gekennzeichnet, dass** das Barriereelement (09) zumindest ein Sichtfenster aufweist, das die Durchsicht durch das Barriereelement in den Sicherheitsbereich ermöglicht.

9. Vorrichtung nach Anspruch 7 oder 8, **dadurch gekennzeichnet, dass** das Barriereelement (09) zumindest teilweise aus einem durchsichtigen Material hergestellt ist.

10. Vorrichtung nach einem der Ansprüche 7 bis 9, **dadurch gekennzeichnet, dass** das Barriereelement (09) zwischen einer Schutzstellung und einer Nichtschutzstellung verstellt werden kann, wobei das Barriereelement (09) bei Anordnung in der Schutzstellung den Eingriff in den Detektionsbereich ausschließt, und wobei das Barriereelement (09) bei Anordnung in der Nichtschutzstellung den Eingriff in den Detektionsbereich ermöglicht.

11. Vorrichtung nach einem der Ansprüche 1 bis 10,**dadurch gekennzeichnet, dass** der zweite Eingriffsschutz (09) eine berührungslos arbeitende Eingriffssensorik (06, 07) umfasst, mit der eine Annäherung an den Detektionsbereich der Eingriffssensorik (06, 07) des ersten Eingriffsschutzes detektiert werden kann, und wobei der Eingriffsschutz eine elektronische Steuerungseinrichtung umfasst, die die Sensordaten der Eingriffssensorik (06, 07) auswertet, und wobei die Steuerungseinrichtung bei Detektion einer Annäherung an den Detektionsbereich ein optisch und/oder akustisch und/oder haptisch wahrnehmbares Warnsignal abgibt.
